# FASCICULE DE BREVET EUROPEEN

(11) **EP 2 781 776 B1**
(45) Date de publication et mention de la délivrance du brevet: **17.05.2017**
(21) Numéro de dépôt: 14160591.5
(22) Date de dépôt: 18.03.2014
(51) Int. Cl.: F16C 33/41

(54) **Palier à roulement avec cage de rétention des billes**
Wälzlager mit Kugelkäfig für die Kugeln
Rolling bearing with cage for retaining balls

(30) Priorité: 18.03.2013 FR 1352393
(43) Date de publication de la demande: 24.09.2014
(73) Titulaire: NTN-SNR Roulements, 74000 Annecy (FR)
(72) Inventeur: Berthier, Julien, 74410 Saint Jorioz (FR)
(74) Mandataire: Sayettat, Julien Christian

(56) Documents cités:
- DE-A1- 10 353 098
- FR-A5- 2 168 808
- JP-A- H0 949 525
- JP-A- 2001 289 249
- JP-A- 2007 255 448

## Description

L'invention concerne un palier à roulement comprenant une cage de rétention des billes. Un tel palier, selon le préambule de la revendication 1, est connu du document FR 2 168 808 A. On connaît de nombreuses géométries de cage de rétention, notamment obtenues par moulage d'une matière thermoplastique éventuellement chargée, comprenant un talon annulaire depuis lequel s'étendent des ponts formant entre eux et ledit talon des logements de rétention d'une bille.

En particulier, chaque pont peut présenter deux bords latéraux délimitant circonférentiellement un logement entre deux ponts adjacents, une ouverture d'introduction des billes dans le logement étant formée entre les extrémités libres desdits bords.

En outre, pour favoriser la rotation des billes sur elles-mêmes lors de la rotation du palier, les bords et le talon présentent chacun une paroi sphérique définissant un logement dont le diamètre interne est adapté pour la rétention d'une bille en contact glissant sur lesdites parois.

Ce type de cage est destiné à être utilisé dans un palier à roulement comprenant un organe intérieur et un organe extérieur formant entre eux au moins un chemin de roulement dans lequel une rangée de billes est disposée afin de permettre la rotation relative desdits organes, chaque bille de ladite rangée étant retenue dans un logement de ladite cage de rétention.

Selon une réalisation, les ponts s'étendent axialement du talon en définissant un diamètre intérieur nominal qui est supérieur à un diamètre d'entrée dans le chemin de roulement, aussi appelé côte H, afin de permettre un montage axial de la cage dans ledit chemin de roulement en disposant les billes dans respectivement un logement.

Toutefois, dans certaines applications, en particulier lorsque le palier a à subir des charges axiales importantes dans au moins un sens, on utilise des paliers dits à gorges profondes dans lesquels le diamètre d'entrée est augmenté afin de former un seuil de retenue axial des billes dans le chemin de roulement, notamment lorsque les billes sont en contact oblique dans ledit chemin de roulement.

Or, cette augmentation du diamètre d'entrée du chemin de roulement induit une augmentation correspondante du diamètre nominal de la cage devant être montée axialement dans ledit chemin, ce qui conduit à un décalage vers l'extérieur des points de contact intérieurs des billes dans les logements.

Il en résulte une dégradation de la tenue de la cage sur la rangée de bille, notamment en ce qu'elle peut plus facilement se déformer en s'ouvrant vers l'organe extérieur, en particulier en cas d'élévation de la température de fonctionnement du palier, ce qui peut conduire à une usure par frottement de ladite cage.

L'invention a pour but de perfectionner l'art antérieur en proposant notamment une cage de rétention à tenue améliorée sur la rangée de billes, notamment en relation avec un palier présentant un chemin de roulement dont le diamètre d'entrée est adapté pour des applications à charges axiales importantes.

A cet effet, selon un premier aspect, l'invention propose un palier à roulement selon la revendication 1.

D'autres objets et avantages de l'invention apparaîtront dans la description qui suit, faite en référence aux figures jointes, dans lesquelles :

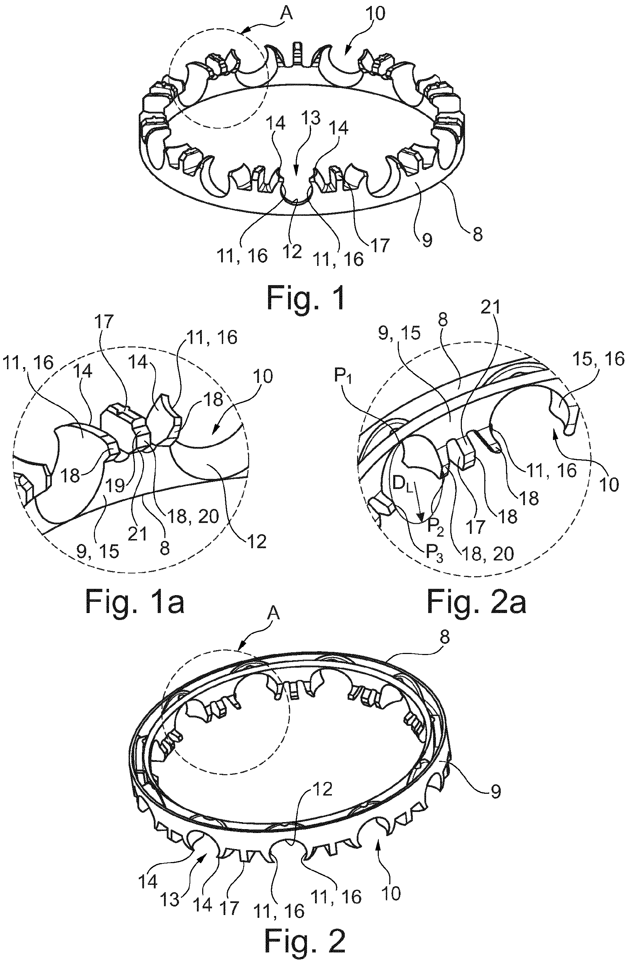

- la figure 1 est une vue en perspective avant d'une cage de rétention selon un mode de réalisation de l'invention, la figure 1 a étant une vue agrandie de la zone A de la figure 1 ;
- la figure 2 est une vue en perspective arrière de la cage de rétention selon la figure 1, la figure 2a étant une vue agrandie de la zone A de la figure 2 ;
- la figure 3 est une vue arrière de la cage de rétention selon la figure 1;
- la figure 4 est une vue en coupe longitudinale d'un palier à roulement selon un mode de réalisation de l'invention.

En relation avec ces figures, on décrit ci-dessous une cage de rétention des billes dans un palier à roulement comprenant un organe intérieur 1 et un organe extérieur 2 montés en rotation relative au moyen d'une rangée de billes 3. Dans cette description, les termes de positionnement dans l'espace sont pris en référence à l'axe de rotation A du palier. En particulier, le terme « intérieur » est relatif à une disposition proche de l'axe A et le terme « extérieur » est relatif à une disposition à distance de l'axe A.

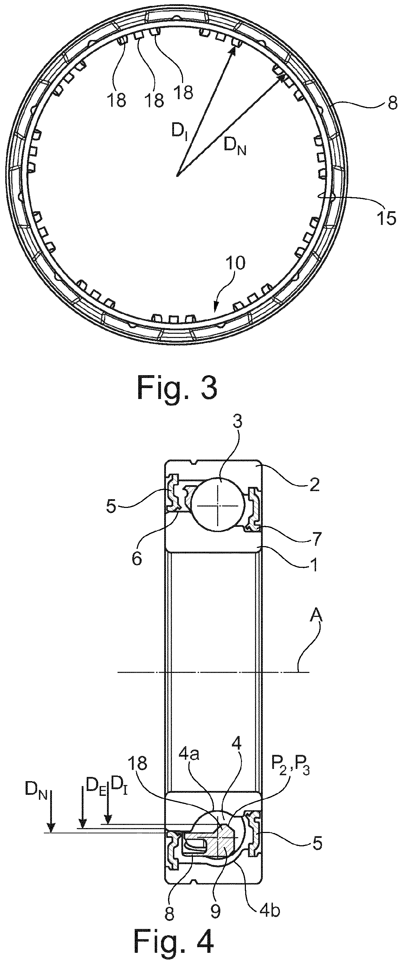

Les billes 3 sont disposées dans un chemin de roulement 4 qui est formé entre une piste de roulement 4a, 4b réalisée sur respectivement un organe 1, 2. En particulier, le chemin de roulement 4 peut être équipé de part et d'autre d'un joint d'étanchéité 5 qui est en contact frottant sur un seuil 6, 7 dudit chemin. En relation avec la figure 4, chaque seuil 6, 7 s'étend axialement en bordant la piste de roulement 4a de l'organe intérieur 1.

La cage de rétention comprend un talon annulaire 8 depuis lequel s'étendent des ponts 9 pour former des logements 10 entre les ponts 9 adjacents, chaque bille 3 de la rangée étant retenue dans un desdits logements. En particulier, la cage peut être réalisée par moulage, notamment d'une matière thermoplastique, par exemple en polyamide éventuellement renforcé par des fibres de verre.

Chaque pont 9 présente deux bords latéraux sur chacun desquels est formée une paroi sphérique 11 qui est agencée pour définir, entre les parois 11 en regard de deux ponts 9 adjacents, un logement 10 adapté pour la rétention d'une bille 3 en contact glissant sur lesdites parois. Ainsi, on favorise la rotation de la bille 3 sur elle-même dans le logement 10 lors de la rotation du palier.

En outre, chaque logement 10 de rétention présente une paroi sphérique 12 formée sur le talon 8 afin de disposer la bille 3 en contact glissant également sur ladite paroi, ainsi qu'une ouverture 13 formée entre les extrémités libres 14 des deux ponts 9 adjacents pour permettre l'introduction de la bille 3 dans le logement 10.

En particulier, chaque logement 10 présente un diamètre interne D_{L} qui est adapté à celui de la bille 3 à retenir, ladite bille étant retenue dans ledit logement en présentant trois points de contact sur les parois sphériques 11, 12. Plus précisément, un point de contact extérieur P₁ est formé sur la paroi 12 du talon 8 et un point de contact intérieur P₂, P₃ est formé sur chacune des parois 11 des ponts 9.

Les ponts 9 sont répartis circonférentiellement sur le talon 8 en s'étendant axialement en définissant un diamètre intérieur nominal D_{N}. Plus précisément, la base 8 et les ponts 9 présentent un bord intérieur 15 qui s'inscrit dans le diamètre intérieur D_{N}. En outre, chaque pont 9 présente une base d'association au talon 8 et, à l'opposé de ladite base, une extrémité libre 14, les ponts 9 étant venus de matière avec le talon 8.

Les logements 10 présentent un fond comprenant la paroi sphérique 12 du talon 8 et deux côtés comprenant respectivement la paroi sphérique 11 d'un bord latéral, chacune desdites parois s'étendant depuis le talon 8 vers l'extrémité libre 14 d'un bord latéral. Par ailleurs, l'ouverture 13 d'introduction des billes 3 est formée entre les extrémités libres 14 de deux ponts 9 adjacents.

Ainsi, la cage peut être montée axialement dans le chemin de roulement 4 après excentration des organes 1, 2 et disposition d'un amas de billes 3 dans ledit chemin, chaque bille 3 étant introduite dans un logement 10 en imprimant à la cage un mouvement axial par rapport à l'amas de billes 3 égalisées.

Dans le mode de réalisation représenté, chaque pont 9 présente deux branches latérales 16 sur lesquelles respectivement une paroi sphérique 11 est formée, une branche centrale 17 étant formée dans un jeu circonférentiel formé entre lesdites branches latérales. Plus précisément, les branches 16, 17 sont séparées deux à deux par un espace circonférentiel qui s'étend depuis la base jusqu'à l'extrémité libre 14 desdites branches.

En particulier, le jeu entre les branches latérales 16 permet un déplacement relatif desdites branches pour, lors de l'appui d'une bille 3 sur les extrémités libres 14, déformer l'ouverture 13 pour permettre l'introduction de ladite bille dans le logement 10, le retour élastique des branches 16 assurant la rétention de la bille 3 dans ledit logement.

Chacun des bords latéraux présente une extension intérieure 18 sur laquelle la paroi sphérique 11 s'étend, lesdites extensions étant inscrites dans un diamètre intérieur D_{I} qui est strictement inférieur au diamètre nominal D_{N}. Ainsi, les points de contact intérieur P₂, P₃ des billes 3 sur les parois sphériques 11 des ponts 9 sont inscrits dans un diamètre intérieur D_{I} qui est inférieur au diamètre nominal D_{N}.

Cette conception permet d'abaisser vers l'intérieur les points de contact intérieurs P₂, P₃ et donc d'améliorer la tenue de la cage sur la rangée de billes 3, notamment relativement à son débattement en ouverture vers l'organe extérieur 2 en cas de centrifugation à haute vitesse et d'élévation de la température de fonctionnement du palier.

Dans une application particulière, la cage peut être utilisée dans un palier dont le chemin de roulement 4 présente un diamètre d'entrée D_{E} important, notamment lorsque les billes 3 sont en contact oblique dans le chemin de roulement 4. Par exemple, le palier peut permettre la reprise d'effort axial dans les deux sens en présentant un seuil 6 important sur lequel le diamètre d'entrée D_{E} est formé.

En particulier, on peut prévoir que le diamètre d'entrée D_{E} soit inférieur au diamètre nominal D_{N} pour conserver un montage axial de la cage dans le chemin de roulement 4 en faisant passer la cage au-delà du seuil 6, tout en étant supérieur au diamètre intérieur D_{I} pour conserver une tenue satisfaisante de la cage en abaissant les points de contact intérieur P₂, P₃.

De façon avantageuse relativement à l'amélioration de la tenue de la cage, le diamètre intérieur D_{I} des extensions 18 peut être tel que : D_{I} < D_{N} - 5% D_{L}. En outre, le diamètre intérieur D_{I} des extensions 18 peut être tel que: D_{I} > D_{N} - 45% D_{L} afin de conserver un montage axial de la cage dans le chemin de roulement 4.

Dans le mode de réalisation représenté, les extensions intérieures 18 sont localisées sur les extrémités libres 14 des bords latéraux, la branche centrale 17 étant également équipée d'une extension 18 qui est inscrite dans le diamètre intérieur D_{I}. En outre, les extensions intérieures 18 s'étendent radialement sur le bord intérieur 15 des ponts 9.

Pour faciliter le montage axial de la cage dans le chemin de roulement 4 en passant au-delà du seuil d'entrée 6, au moins certaines extensions intérieures 18 peuvent présenter un chanfrein avant 19 dont le diamètre intérieur varie depuis le diamètre nominal D_{N} vers le diamètre intérieur D_{I} de l'extension 18.

Plus précisément, au moins certaines extensions intérieures 18 peuvent présenter une portée centrale 20 de diamètre intérieur D_{I} sur laquelle le point de contact intérieur P₂, P₃ avec la bille 3 est formé, ladite portée centrale étant bordée de part et d'autre par une portée respectivement avant 19 formant le chanfrein et arrière 21 dont le diamètre décroit jusqu'au diamètre nominal D_{N}.

## Revendications

1. Palier à roulement comprenant un organe intérieur (1) et un organe extérieur (2) formant entre eux au moins un chemin de roulement (4) dans lequel une rangée de billes (3) est disposée afin de permettre la rotation relative desdits organes, lesdites billes étant en contact oblique dans ledit chemin de roulement, chaque bille (3) de ladite rangée étant retenue dans un logement (10) d'une cage de rétention comprenant un talon annulaire (8) depuis lequel s'étendent axialement des ponts (9) en définissant un diamètre intérieur nominal D_{N}, chaque pont (9) présentant deux bords latéraux sur chacun desquels est formée une paroi sphérique (11) qui est agencée pour définir, entre les parois (11) en regard de deux ponts (9) adjacents, le logement (10) dont le diamètre interne D_{L} est adapté pour la rétention d'une bille (3) en contact glissant sur lesdites parois, ladite cage étant **caractérisée en ce que** chacun des bords latéraux présente une extension intérieure (18) sur laquelle la paroi sphérique (11) s'étend, lesdites extensions étant inscrites dans un diamètre intérieur D_{I} qui est strictement inférieur au diamètre nominal D_{N}.

2. Palier à roulement selon la revendication 1, **caractérisé en ce que** le diamètre intérieur D_{I} des extensions (18) est tel que : D_{I} < D_{N} - 5% D_{L}.

3. Palier à roulement selon la revendication 1 ou 2, **caractérisé en ce que** le diamètre intérieur D_{I} des extensions (18) est tel que : D_{I} > D_{N} - 45% D_{L}.

4. Palier à roulement selon l'une quelconque des revendications 1 à 3, **caractérisé en ce que** chaque paroi sphérique (11) s'étend depuis le talon (8) vers une extrémité libre (14) d'un bord latéral, l'extension intérieure (18) étant localisée sur ladite extrémité libre.

5. Palier à roulement selon l'une quelconque des revendications 1 à 4, **caractérisé en ce que** les extensions (18) s'étendent radialement sur un bord intérieur (15) des ponts (9).

6. Palier à roulement selon l'une quelconque des revendications 1 à 5, **caractérisé en ce qu'**au moins certaines extensions intérieures (18) présentent un chanfrein avant (19) dont le diamètre intérieur varie depuis le diamètre nominal D_{N} vers le diamètre intérieur D_{I} de l'extension (18).

7. Palier à roulement selon la revendication 6, **caractérisé en ce qu'**au moins certaines extensions intérieures (18) présentent une portée centrale (20) de diamètre intérieur D_{I}, ladite portée centrale étant bordée de part et d'autre par une portée respectivement avant (19) et arrière (21) dont le diamètre décroit jusqu'au diamètre nominal D_{N}.

8. Palier à roulement selon l'une quelconque des revendications 1 à 7, **caractérisé en ce que** chaque pont (9) présente deux branches latérales (16) sur lesquelles respectivement une paroi sphérique (11) est formée, un jeu circonférentiel étant formé entre lesdites branches pour permettre un déplacement relatif desdites branches.

9. Palier à roulement selon la revendication 8, **caractérisé en ce qu'**une branche centrale (17) est formée dans le jeu circonférentiel, ladite branche centrale étant équipée d'une extension intérieure (18) qui est inscrite dans le diamètre intérieur D_{I}.

10. Palier à roulement selon l'une quelconque des revendications 1 à 9, **caractérisé en ce que** chaque logement (10) de rétention présente une paroi sphérique (12) formée sur le talon (8) et une ouverture (13) formée entre les extrémités libres (14) des deux ponts (9) adjacents.

11. Palier à roulement selon l'une quelconque des revendications 1 à 10, **caractérisé en ce que** le chemin de roulement (4) présente un diamètre d'entrée D_{E} qui est compris entre le diamètre nominal D_{N} et le diamètre intérieur D_{I}.

## Patentansprüche

1. Wälzlager, umfassend ein inneres Organ (1) und ein äußeres Organ (2), die zwischen sich mindestens eine Wälzbahn (4) bilden, in der eine Reihe von Kugeln (3) angeordnet ist, um die relative Rotation zwischen den Organen zu ermöglichen, wobei die Kugeln in der Wälzbahn in schrägem Kontakt sind, wobei jede Kugel (3) der Reihe in einer Aufnahme (10) eines Rückhaltekäfigs festgehalten ist, umfassend einen ringförmigen Ansatz (8), von dem sich Brücken (9) axial erstrecken, indem sie einen nominalen inneren Durchmesser D_{N} definieren, wobei jede Brücke (9) zwei seitliche Ränder aufweist, auf jedem dieser eine sphärische Wand (11) gebildet ist, die positioniert ist, um zwischen den Wänden (11) gegenüber zwei benachbarten Brücken (9) die Aufnahme (10) zu definieren, deren innerer Durchmesser D_{L} ausgelegt ist, um eine Kugel (3) in gleitendem Kontakt auf den Wänden zurückzuhalten, wobei der Käfig **dadurch gekennzeichnet ist, dass** jeder der seitlichen Ränder eine innere Verlängerung (18) aufweist, auf der sich die sphärische Wand (11) erstreckt, wobei die Verlängerungen in einen inneren Durchmesser D_{I} eingeschrieben sind, der streng kleiner als der nominale Durchmesser D_{N} ist.

2. Wälzlager nach Anspruch 1, **dadurch gekennzeichnet, dass** der innere Durchmesser D_{I} der Verlängerungen (18) wie folgt ist: D_{I} < D_{N} - 5 % D_{L}.

3. Wälzlager nach Anspruch 1 oder 2, **dadurch gekennzeichnet, dass** der innere Durchmesser D_{I} der Verlängerungen (18) wie folgt ist: D_{I} > D_{N} - 45 % D_{L}.

4. Wälzlager nach einem der Ansprüche 1 bis 3, **dadurch gekennzeichnet, dass** sich jede sphärische Wand (11) vom Ansatz (8) hin zu einem freien Ende (14) eines seitlichen Rands erstreckt, wobei sich die innere Verlängerung (18) auf dem freien Ende befindet.

5. Wälzlager nach einem der Ansprüche 1 bis 4, **dadurch gekennzeichnet, dass** sich die Verlängerungen (18) radial auf dem inneren Rand (15) der Brücken (9) erstrecken.

6. Wälzlager nach einem der Ansprüche 1 bis 5, **dadurch gekennzeichnet, dass** mindestens bestimmte innere Verlängerungen (18) eine vordere Abschrägung (19) aufweisen, deren innerer Durchmesser vom nominalen Durchmesser D_{N} hin zum inneren Durchmesser D_{I} der Verlängerung (18) variiert.

7. Wälzlager nach Anspruch 6, **dadurch gekennzeichnet, dass** mindestens bestimmte innere Verlängerungen (18) einen zentralen Bereich (20) mit einem inneren Durchmesser D_{I} aufweisen, wobei der zentrale Bereich auf beiden Seiten eines vorderen (19) und hinteren (21) Bereichs umgeben ist, dessen Durchmesser sich bis zum nominalen Durchmesser D_{N} verringert.

8. Wälzlager nach einem der Ansprüche 1 bis 7, **dadurch gekennzeichnet, dass** jede Brücke (9) zwei seitliche Zweige (16) aufweist, auf denen jeweils eine sphärische Wand (11) gebildet ist, wobei ein Umfangsspiel zwischen den Zweigen gebildet ist, um eine relative Verschiebung der Zweige zu ermöglichen.

9. Wälzlager nach Anspruch 8, **dadurch gekennzeichnet, dass** im Umfangsspiel ein zentraler Zweig (17) gebildet ist, wobei der zentrale Zweig mit einer inneren Verlängerung (18) ausgestattet ist, die in den inneren Durchmesser D_{I} eingeschrieben ist.

10. Wälzlager nach einem der Ansprüche 1 bis 9, **dadurch gekennzeichnet, dass** jede Rückhalteaufnahme (10) eine sphärische Wand (12) aufweist, die auf dem Ansatz (8) gebildet ist, und eine Öffnung (13), die zwischen den freien Enden (14) der zwei benachbarten Brücken (9) gebildet ist.

11. Wälzlager nach einem der Ansprüche 1 bis 10, **dadurch gekennzeichnet, dass** die Wälzbahn (4) einen Eingangsdurchmesser D_{E} aufweist, der im Bereich zwischen dem nominalen Durchmesser D_{N} und dem inneren Durchmesser D_{I} liegt.

## Claims

1. Rolling bearing comprising an inner member (1) and an outer member (2) forming between them at least one rolling track (4) in which a row of balls (3) is disposed so as to allow the relative rotation of said members, said balls being in oblique contact in said rolling track, each ball (3) in said row being held in a housing (10) of a holding cage comprising an annular shoulder (8) from which bridges (9) extend axially, defining a nominal inside diameter D_{N}, each bridge (9) having two lateral edges on each of which there is formed a spherical wall (11) that is arranged so as to define, between the facing walls (11) of two adjacent bridges (9), the housing (10) the inside diameter D_{L} of which is adapted for holding a ball (3) in sliding contact on said walls, said cage being **characterised in that** each of said lateral edges has an internal extension (18) on which the spherical wall (11) extends, said extensions fitting in an inside diameter D_{I} that is strictly less than the nominal diameter D_{N}.

2. Rolling bearing according to claim 1, **characterised in that** the inside diameter D_{I} of the extensions (18) is such that: D_{I} < D_{N} - 5% D_{L} .

3. Rolling bearing according to claim 1 or claim 2, **characterised in that** the inside diameter D_{I} of the extensions (18) is such that: D_{I} > D_{N} - 45% D_{L}.

4. Rolling bearing according to any of claims 1 to 3, **characterised in that** each spherical wall (11) extends from the shoulder (8) towards a free end (14) of a lateral edge, the internal extension (18) being located on said free end.

5. Rolling bearing according to any of claims 1 to 4, **characterised in that** the extensions (18) extend radially on an internal edge (15) of the bridges (9).

6. Rolling bearing according to any of claims 1 to 5, **characterised in that** at least some internal extensions (18) have a front bevel (19) the inside diameter of which varies from the nominal diameter D_{N} towards the inside diameter D_{I} of the extension (18).

7. Rolling bearing according to claim 6, **characterised in that** at least some internal extensions (18) have a central span (20) with an inside diameter D_{I}, said central span being bordered on either side by a respectively front (19) and rear (21) span, the diameter of which decreases to the nominal diameter D_{N}.

8. Rolling bearing according to any of claims 1 to 7, **characterised in that** each bridge (9) has two lateral arms (16) on which respectively a spherical wall (11) is formed, a circumferential clearance being formed between said arms so as to allow a relative movement of said arms.

9. Rolling bearing according to claim 8, **characterised in that** a central arm (17) is formed in the circumferential clearance, said central arm being equipped with an internal extension (18) that is inscribed in the inside diameter D_{I}.

10. Rolling bearing according to any of claims 1 to 9, **characterised in that** each holding housing (10) has a spherical wall (12) formed on the shoulder (8) and an opening (13) formed between the free ends (14) of the two adjacent bridges (9).

11. Rolling bearing according to any of claims 1 to 10, **characterised in that** the rolling track (4) has an entry diameter D_{E} that is between the nominal diameter D_{N} and the inside diameter D_{I}.
